# EUROPEAN PATENT APPLICATION

(11) **EP 4 694 154 A1**
(43) Date of publication of application: **11.02.2026**
(21) Application number: 24777770.9
(22) Date of filing: 18.03.2024
(51) Int. Cl.: H04N 21/4788

(54) **CO-STREAMING METHOD AND APPARATUS, DEVICE, AND STORAGE MEDIUM**

(30) Priority: 24.03.2023 CN 202310316110
(71) Applicant: Beijing Zitiao Network Technology Co., Ltd., Beijing 100190 (CN)
(72) Inventor: GUO, Yunguang, Beijing 100028 (CN); LUO, Yangze, Beijing 100028 (CN); GONG, Xinwei, Beijing 100028 (CN); ZHANG, Wei, Beijing 100028 (CN)
(74) Representative: Marks & Clerk LLP
(86) International application number: PCT/CN2024/082131
(87) International publication number: WO 2024/198981

(57) **Abstract**

Embodiments of the present disclosure provide a virtual co-streaming method and apparatus, a device, and a storage medium. A virtual co-streaming interface is displayed based on a first co-streaming operation triggered by a target object in a live streaming room; a virtual co-streaming request is generated based on a second co-streaming operation triggered by the target object for the virtual co-streaming interface; the virtual co-streaming request is sent to a live streaming server, to cause the live streaming server to create at least one virtual object; and information of the at least one virtual object returned by the live streaming server is received, and the information of the at least one virtual object is displayed in a corresponding microphone slot area.

## Description

### CROSS-REFERENCE TO RELATED APPLICATION(S)

The present application claims priority to Chinese Patent Application No. 202310316110.8, entitled "CO-STREAMING METHOD AND APPARATUS, DEVICE, AND STORAGE MEDIUM", filed with the China National Intellectual Property Administration on March 24, 2023, which is incorporated by reference in its entirety.

### FIELD

Embodiments of the present disclosure relate to the technical field of live streaming, and in particular, to a co-streaming method and apparatus, a device, and a storage medium.

### BACKGROUND

Most current live streaming rooms support multi-person co-streaming, and therefore co-streaming conditions typically need to be tested during the development and testing of the live streaming rooms. Existing co-streaming testing solutions are inefficient and prone to errors.

### SUMMARY

Embodiments of the present disclosure provide a co-streaming method and apparatus, a device, and a storage medium, thereby reducing the development and test costs for co-streaming, and improving the development and test efficiency of the co-streaming.

In a first aspect, embodiments of the present disclosure provide a co-streaming method. The method is performed by a client, including:
displaying a virtual co-streaming interface based on a first co-streaming operation triggered by a target object in a live streaming room;
generating a virtual co-streaming request based on a second co-streaming operation triggered by the target object for the virtual co-streaming interface;
sending the virtual co-streaming request to a live streaming server, to cause the live streaming server to create at least one virtual object; and
receiving information of the at least one virtual object returned by the live streaming server, and displaying the information of the at least one virtual object in a corresponding microphone slot area.

In a second aspect, embodiments of the present disclosure further provides a co-streaming method. The method is performed by a live streaming server, including:
receiving a virtual co-streaming request sent by a client through a live streaming room, and creating a virtual object according to the virtual co-streaming request;
sending a co-streaming request to a co-streaming server based on the virtual object, to cause the co-streaming server to establish co-streaming between the virtual object and a target object according to the co-streaming request; and
receiving successful co-streaming information returned by the co-streaming server, sending the information of the virtual object to the client according to the successful co-streaming information, to cause the client to display the information of the virtual object in a corresponding microphone slot area.

In a third aspect, embodiments of the present disclosure further provides a virtual co-streaming apparatus. The apparatus is configured in a client, including:
a virtual co-streaming interface display module, configured to display a virtual co-streaming interface based on a first co-streaming operation triggered by a target object in a live streaming room;
a virtual co-streaming request generation module, configured to generate a virtual co-streaming request based on a second co-streaming operation triggered by the target object for the virtual co-streaming interface;
a virtual co-streaming request sending module, configured to send the virtual co-streaming request to a live streaming server, to cause the live streaming server to create at least one virtual object; and
an information display module, configured to receive information of the at least one virtual object returned by the live streaming server, and display the information of the at least one virtual object in a corresponding microphone slot area.

In a fourth aspect, embodiments of the present disclosure further provides a virtual co-streaming apparatus. The apparatus is arranged in a live streaming server, including:
a virtual co-streaming request receiving module, configured to receive a virtual co-streaming request sent by a client through a live streaming room, and create a virtual object according to the virtual co-streaming request;
a co-streaming request sending module, configured to send a co-streaming request to a co-streaming server based on the virtual object, to cause the co-streaming server to establish co-streaming between the virtual object and a target object according to the co-streaming request; and
an information sending module, configured to receive successful co-streaming information returned by the co-streaming server, send the information of the virtual object to the client according to the successful co-streaming information, to cause the client to display the information of the virtual object in a corresponding microphone slot area.

In a fifth aspect, embodiments of the present disclosure further provides an electronic device. The electronic device includes:
one or more processors; and
a storage, configured to store one or more programs, where
the one or more programs, when executed by the one or more processors, cause the one or more processors to implement the virtual co-streaming method according to the embodiments of the present disclosure.

In a sixth aspect, embodiments of the present disclosure further provides a storage medium including computer-executable instructions, where the computer-executable instructions, when executed by a computer processor, are configured to perform the virtual co-streaming method according to the embodiments of the present disclosure.

The embodiments of the present disclosure disclose the virtual co-streaming method and apparatus, the device, and the storage medium. The virtual co-streaming interface is displayed based on the first co-streaming operation triggered by the target object in the live streaming room; the virtual co-streaming request is generated based on the second co-streaming operation triggered by the target object for the virtual co-streaming interface; the virtual co-streaming request is sent to the live streaming server, to cause the live streaming server to create the at least one virtual object; and the information of the at least one virtual object returned by the live streaming server is received, and the information of the at least one virtual object is displayed in the corresponding microphone slot area.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of a co-streaming method according to embodiments of the present disclosure;
FIG. 2 is a schematic diagram of the display of a virtual co-streaming interface according to embodiments of the present disclosure;
FIG. 3 is a schematic flowchart of a co-streaming method according to embodiments of the present disclosure;
FIG. 4 is a signaling diagram of a co-streaming method according to embodiments of the present disclosure;
FIG. 5 is a schematic diagram of a structure of a co-streaming apparatus according to embodiments of the present disclosure;
FIG. 6 is schematic diagram of a structure of a co-streaming apparatus according to embodiments of the present disclosure; and
FIG. 7 is a schematic diagram of a structure of an electronic device according to embodiments of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "one" and "a plurality of" mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a target object shall be informed of the type, range of use, use scenarios, etc., of personal information involved in the present disclosure in an appropriate manner in accordance with relevant laws and regulations, and the authorization of the target object shall be obtained.

For example, in response to reception of an active request from the target object, a prompt message is sent to the target object to clearly inform the target object that a requested operation will require access to and use of the personal information of the target object. As such, the target object can independently choose, according to the prompt message, whether to provide the personal information to software or hardware, such as an electronic device, an application, a server, or a storage medium, that performs the operations of the technical solutions of the present disclosure.

As an optional but non-limiting implementation, in response to the reception of the active request from the target object, the prompt message may be sent to the target object in the form of, for example, a pop-up window, in which the prompt message may be presented in text. Further, the pop-up window may also carry a selection control for the target object to choose whether to "agree" or "disagree" to provide the personal information to the electronic device.

It should be understood that the above notification and target object authorization obtaining process is only illustrative, which does not limit the implementations of the present disclosure, and other methods that comply with the relevant laws and regulations may also be applied to the implementations of the present disclosure.

It should be understood that data (including but not limited to the data itself, and data acquisition, or usage) involved in the technical solutions should comply with the requirements of corresponding laws and regulations, and relevant stipulations.

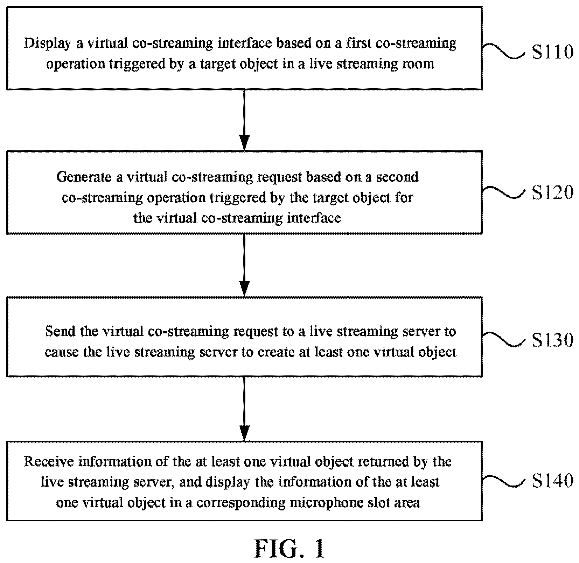

FIG. 1 is a schematic flowchart of a co-streaming method according to embodiments of the present disclosure. These embodiments of the present disclosure are applicable to a case where a target object is in co-streaming with a virtual object. The method may be performed by a co-streaming apparatus. The apparatus may be implemented in the form of software and/or hardware, and is optionally arranged in an electronic device where a client is located. The electronic device may be a mobile terminal, a personal computer (PC) terminal, a server, or the like.

As shown in FIG. 1, the method includes:
S110: Display a virtual co-streaming interface based on a first co-streaming operation triggered by a target object in a live streaming room.

At least one co-streaming control is displayed on the virtual co-streaming interface. The virtual co-streaming interface may be provided by a virtual co-streaming tool. The virtual co-streaming tool may be configured in the live streaming room when testing a co-streaming. The target object may be a real object that may create a live streaming room in a live stream APP to conduct live streaming or interact with other objects through the co-streaming in the live streaming room.

In these embodiments, after a user creates and enters the live streaming room, the virtual co-streaming tool may be opened through a preconfigured debug entry in the live streaming room, thereby displaying the virtual co-streaming interface. The debug entry may be embodied in the form of a button. The triggerable co-streaming control is displayed on the virtual co-streaming interface, and the user sends a virtual co-streaming request to a live streaming server by triggering the co-streaming control.

Optionally, a process of displaying a virtual co-streaming interface based on a first co-streaming operation triggered by a target object in a live streaming room may include: determining the number of available microphone slots in the live streaming room in response to detecting that the target object triggers a first virtual co-streaming operation in the live streaming room; and displaying the virtual co-streaming interface based on the first virtual co-streaming operation, and generating co-streaming controls equal to the number of the available microphone slots on the virtual co-streaming interface.

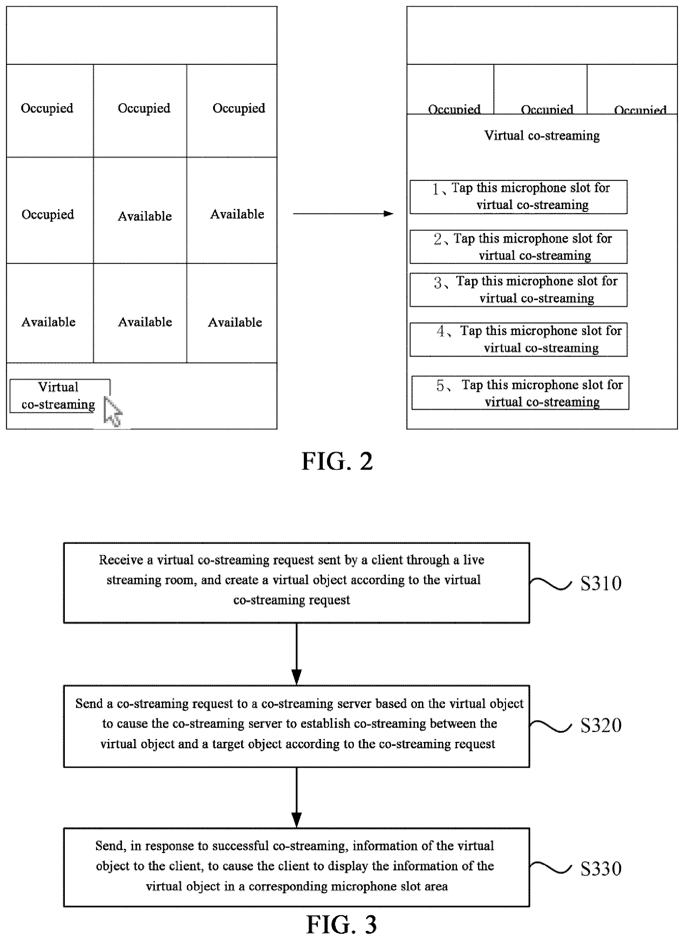

The number of the available microphone slots may be understood as the number of microphone slots not in the co-streaming, and the number of the co-streaming controls on the virtual co-streaming interface is determined by the number of the available microphone slots. In these embodiments, the total number of microphone slots that are available in the co-streaming is preset in the live streaming room. When detecting that the target object triggers the first virtual co-streaming operation in the live streaming room, the number of microphone slots that are currently occupied is first determined, and then, the number of the occupied microphone slots is subtracted from the total number of microphone slots to obtain the number of the available microphone slots. Exemplarily, assuming that the total number of microphone slots that are available in the co-streaming in the live streaming room is 9 and the number of occupied microphone slots is 4, the number of available microphone slots is 5, namely, the number of the co-streaming controls on the virtual co-streaming interface is also 5. Exemplarily, FIG. 2 is a schematic diagram of the display of a virtual co-streaming interface according to an embodiment. As shown in FIG. 2, in a left image, the target object taps a "virtual co-streaming" button in the live streaming room, a terminal obtains that the number of microphone slots that are currently occupied is 4, and therefore the number of available microphone slots is determined as 5; and in a right image, the virtual co-streaming interface pops up on a live streaming room page, and 5 co-streaming controls are generated on the virtual co-streaming interface.

S120: Generate a virtual co-streaming request based on a second co-streaming operation triggered by the target object for the virtual co-streaming interface.

In these embodiments, a process of generating a virtual co-streaming request based on a second co-streaming operation triggered by the target object for the virtual co-streaming interface may include: generating the virtual co-streaming request based on the second co-streaming operation triggered by the target object for at least one co-streaming control.

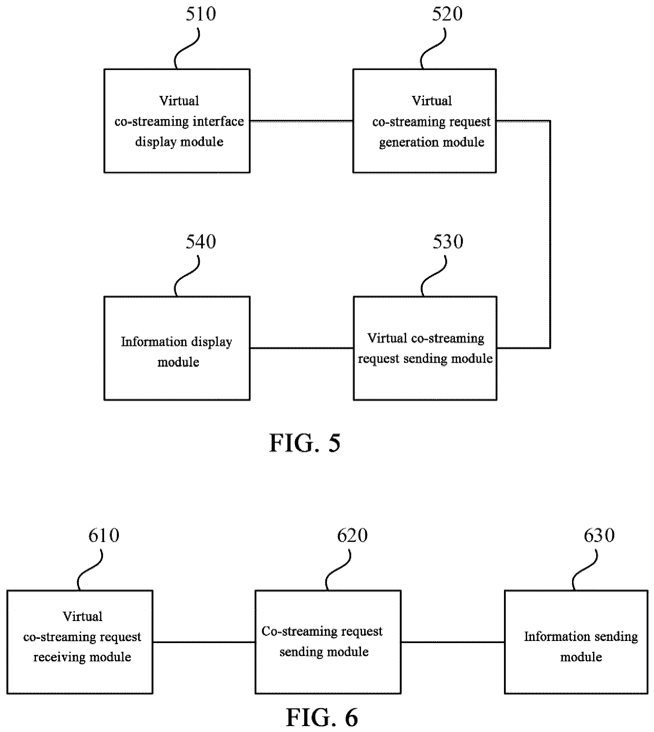

Specifically, to generate a virtual co-streaming request based on a second co-streaming operation triggered by the target object for the virtual co-streaming interface, after the virtual co-streaming interface pops up, the user may tap all or some of the co-streaming controls on the virtual co-streaming interface, to generate the virtual co-streaming request. The number of virtual co-streaming requests is related to the number of the co-streaming controls tapped by the target object. Exemplarily, using an example shown in FIG. 2, 5 co-streaming controls are displayed on the virtual co-streaming interface, and the user may tap 3 of the co-streaming controls to generate 3 virtual co-streaming requests.

S130: Send the virtual co-streaming request to the live streaming server, to cause the live streaming server to create at least one virtual object.

In these embodiments, after generating the virtual co-streaming request, the client sends the virtual co-streaming request to the live streaming server. The live streaming server first creates the virtual object according to the virtual co-streaming request and then sends the co-streaming request to a co-streaming server based on the virtual object, so that the co-streaming server establishes the co-streaming between the virtual object and the target object according to the co-streaming request. When successful co-streaming information returned by the co-streaming server is received, information of the virtual object is sent to the client.

S140: Receive information of the at least one virtual object returned by the live streaming server, and display the information of the at least one virtual object in a corresponding microphone slot area.

The information of the virtual object at least includes identification information of the virtual object and audio and videos associated with the virtual object, and the identification information may be information such as a name and an avatar of the virtual object. In these embodiments, when the client where the target object is located receives the information of the at least one virtual object returned by the live streaming server, it indicates that the target object is successfully in co-streaming with the at least one virtual object, and the information of the virtual object is displayed in the corresponding microphone slot area. Namely, the information of the virtual object is displayed in the corresponding microphone slot area, or the audio and videos are played in the corresponding microphone slot area.

According to the technical solution in these embodiments of the present disclosure, the virtual co-streaming interface is displayed based on the first co-streaming operation triggered by the target object in the live streaming room; the virtual co-streaming request is generated based on the second co-streaming operation triggered by the target object for the virtual co-streaming interface; the virtual co-streaming request is sent to the live streaming server, to allow the live streaming server to create the at least one virtual object; and the information of the at least one virtual object returned by the live streaming server is received, and the information of the at least one virtual object is displayed in the corresponding microphone slot area. According to the co-streaming method according to these embodiments of the present disclosure, the client sends the co-streaming request to the live streaming server, to cause the live streaming server to create the virtual object, thereby achieving the co-streaming between the target object and the virtual object. Co-streaming development and test are completed through the virtual object without real devices, thereby reducing the development and test costs for the co-streaming, and improving the development and test efficiency for the co-streaming.

FIG. 3 is a schematic flowchart of a co-streaming method according to embodiments of the present disclosure. These embodiments of the present disclosure are applicable to a case where a target object is in co-streaming with a virtual object. The method may be performed by a co-streaming apparatus. The apparatus may be implemented in the form of software and/or hardware, and is optionally arranged in an electronic device where a live streaming server is located.

As shown in FIG. 3, the method includes:
S310: Receive a virtual co-streaming request sent by a client through a live streaming room, and create a virtual object according to the virtual co-streaming request.

The virtual co-streaming request may be generated after triggering by the target object in the live streaming room of the client, and for a trigger method, reference may be made to the above embodiment, which is not elaborated herein. The virtual object, also referred to as a robot instance, is structured data, and a structure of the data is preset by a developer.

In these embodiments, after receiving the co-streaming request sent by the client, the live streaming server first determines whether the co-streaming request is the virtual co-streaming request, and if the co-streaming request is the virtual co-streaming request, the virtual object is created according to the virtual co-streaming request.

Optionally, a method for creating the virtual object according to the virtual co-streaming request includes: acquiring pre-stored information of virtual objects; and generating structured data in a preset structure according to the information of the virtual object to obtain the virtual object.

The information of the virtual object may include identification information of the virtual object, such as a name and an avatar. In these embodiments, an information list of virtual objects may be pre-constructed and is stored in a database. After receiving the virtual co-streaming request, the live streaming server randomly acquires information of one virtual object from the information list. After the information of the virtual object is acquired, the information of the virtual object is assembled according to a set structure to generate the set structured data, thereby obtaining the virtual object.

S320: Send a co-streaming request to a co-streaming server based on the virtual object, to cause the co-streaming server to establish co-streaming between the virtual object and the target object according to the co-streaming request.

The co-streaming server may be understood as a server for the co-streaming, such as a web real-time communication (WebRTC) server. In these embodiments, for establishing the co-streaming between the virtual object and the target object by the co-streaming server according to the co-streaming request, reference may be made to a co-streaming function of the existing WebRTC server, which is not limited herein.

The live streaming server may send the co-streaming request to the co-streaming server through a co-streaming engine. Specifically, a method for sending the co-streaming request to the co-streaming server based on the virtual object may include: running the co-streaming engine; and sending the co-streaming request to the co-streaming server through the co-streaming engine.

The co-streaming request carries the information of the virtual object. The co-streaming engine has a function of invoking the co-streaming server, which may be, for example, a WebRTC software development kit (WebRTC SDK). The co-streaming engine may be deployed in the live streaming server, or may also be deployed in a browser. If the co-streaming engine is deployed in the live streaming server, the co-streaming engine may be directly run in the live streaming server, thereby sending the co-streaming request to the co-streaming server through the co-streaming engine. If the co-streaming engine is deployed in the browser, the browser needs to be first started, and then the co-streaming engine is run in the browser.

Optionally, a method for running the co-streaming engine may include: starting a headless browser; and running the co-streaming engine in the headless browser.

The headless browser may be any existing browser, such as a chrome browser. Specifically, when the virtual object is created, the headless browser is started, then, the co-streaming engine is run in the headless browser, and finally the co-streaming request is sent to the co-streaming server through the co-streaming engine.

S330: Send, in response to successful co-streaming, the information of the virtual object to the client, to cause the client to display the information of the virtual object in a corresponding microphone slot area.

The information of the virtual object at least includes: identification information of the virtual object, and audio and videos associated with the virtual object. In these embodiments, after the co-streaming server establishes the co-streaming between the virtual object and the target object, the successful co-streaming information is returned to the live streaming server, and the live streaming server sends the information of the virtual object to the client according to the successful co-streaming information, to cause the client to display the information of the virtual object in the corresponding microphone slot area.

According to the technical solution in these embodiments, the virtual co-streaming request sent by the client through the live streaming room is received, and the virtual object is created according to the virtual co-streaming request; the co-streaming request is sent to the co-streaming server based on the virtual object, to cause the co-streaming server to establish the co-streaming between the virtual object and the target object according to the co-streaming request; and the successful co-streaming information returned by the co-streaming server is received, and the information of the virtual object is sent to the client according to the successful co-streaming information, to cause the client to display the information of the virtual object in the corresponding microphone slot area. The virtual object is generated based on the virtual co-streaming request sent by the client, and the co-streaming is established between the virtual object and the target object through the co-streaming server, thereby achieving the co-streaming between the target object and the virtual object. Co-streaming development and test are completed through the virtual object without real devices, thereby reducing the development and test costs for the co-streaming, and improving the development and test efficiency for the co-streaming.

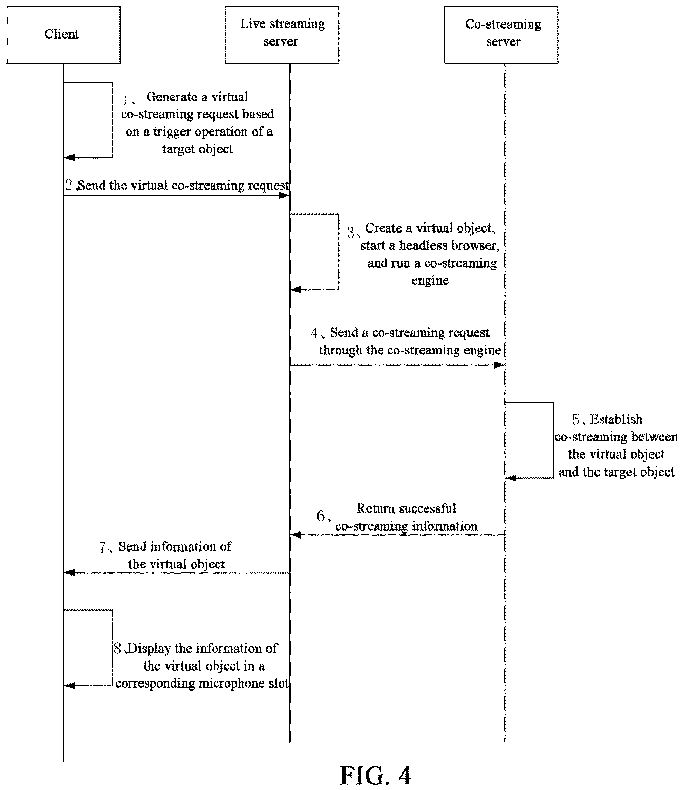

Based on the above embodiment, FIG. 4 is a signaling diagram of a co-streaming method according to an embodiment. As shown in FIG. 4, the method includes the following steps:
1. A target object opens a virtual co-streaming interface in a live streaming room, and taps a co-streaming control to generate a virtual co-streaming request.
2. A client sends the virtual co-streaming request to a live streaming server.
3. The live streaming server creates a virtual object according to the virtual co-streaming request, starts a headless browser, and runs a co-streaming engine in the headless browser.
4. The live streaming server sends a co-streaming request to a co-streaming server through the co-streaming engine.
5. The co-streaming server establishes co-streaming between the virtual object and the target object.
6. The co-streaming server returns successful co-streaming information to the live streaming server.
7. The live streaming server sends information of the virtual object to the client.
8. The client displays the information of the virtual object in a corresponding microphone slot.

FIG. 5 is a schematic diagram of a structure of a co-streaming apparatus according to embodiments of the present disclosure. As shown in FIG. 5, the apparatus includes:
a virtual co-streaming interface display module 510, configured to display a virtual co-streaming interface based on a first co-streaming operation triggered by a target object in a live streaming room;
a virtual co-streaming request generation module 520, configured to generate a virtual co-streaming request based on a second co-streaming operation triggered by the target object for the virtual co-streaming interface;
a virtual co-streaming request sending module 530, configured to send the virtual co-streaming request to a live streaming server, to cause the live streaming server to create at least one virtual object; and
an information display module 540, configured to receive information of at least one virtual object returned by the live streaming server, and display the information of the at least one virtual object in a corresponding microphone slot area.

Optionally, the virtual co-streaming interface display module 510 is further configured to:
determine the number of available microphone slots in the live streaming room when detecting that the target object triggers a first virtual co-streaming operation in the live streaming room; and
display the virtual co-streaming interface based on the first virtual co-streaming operation, and generate co-streaming controls for the number of the available microphone slots on the virtual co-streaming interface.

Optionally, the virtual co-streaming request generation module 520 is further configured to:
generate a virtual co-streaming request based on the second co-streaming operation triggered by the target object for at least one of the co-streaming controls.

FIG. 6 is a schematic diagram of a structure of a co-streaming apparatus according to embodiments of the present disclosure. As shown in FIG. 6, the apparatus includes:
a virtual co-streaming request receiving module 610, configured to receive a virtual co-streaming request sent by a client through a live streaming room, and create a virtual object according to the virtual co-streaming request;
a co-streaming request sending module 620, configured to send a co-streaming request to a co-streaming server based on the virtual object, to cause the co-streaming server to establish co-streaming between the virtual object and the target object according to the co-streaming request; and
an information sending module 630, configured to send, in response to successful co-streaming, information of the virtual object to the client, to cause the client to display the information of the virtual object in a corresponding microphone slot area.

Optionally, the virtual co-streaming request receiving module 610 is further configured to:
acquire pre-stored information of virtual objects; and
generate structured data in a preset structure according to the information of the virtual object to obtain the virtual object.

Optionally, the co-streaming request sending module 620 is further configured to:
run a co-streaming engine; and
send the co-streaming request to the co-streaming server through the co-streaming engine, where the co-streaming request carries the information of the virtual object.

Optionally, the co-streaming request sending module 620 is further configured to:
start a headless browser; and
run the co-streaming engine in the headless browser.

Optionally, the information of the virtual object at least includes: identification information of the virtual object, and audio and videos associated with the virtual object.

The co-streaming apparatus according to these embodiments of the present disclosure may perform the co-streaming method according to any embodiment of the present disclosure, and has the corresponding functional modules and beneficial effects for performing the method.

It should be noted that the various units and modules included in the above apparatus are only divided according to functional logics, but are not limited to the above division, as long as the corresponding functions can be achieved; and in addition, the specific names of the functional units are only for the convenience of distinguishing each other, and are not used to limit the scope of protection of the embodiments of the present disclosure.

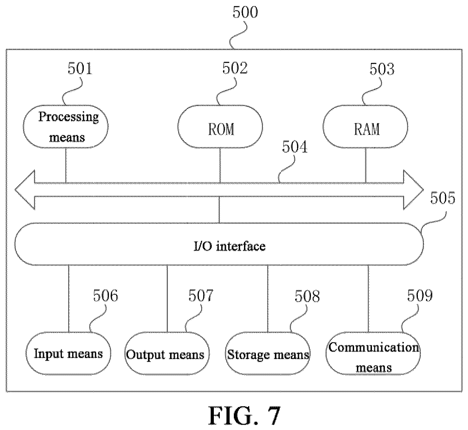

FIG. 7 is a schematic diagram of a structure of an electronic device according to embodiments of the present disclosure. Referring to FIG. 7 as below, FIG. 7 illustrates a schematic diagram of a structure of an electronic device (e.g., a terminal device or a server in FIG. 7) 500 suitable for implementing embodiments of the present disclosure. The terminal device in these embodiments of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 7 is merely an example, and should not impose any limitation on the function and scope of use of the embodiments of the present disclosure.

As shown in FIG. 7, the electronic device 500 may include a processing means (e.g., a central processing unit and a graphics processing unit) 501, which may perform various appropriate actions and processing according to a program stored on a read-only memory (ROM) 502 or a program loaded from a storage means 508 into a random access memory (RAM) 503. The RAM 503 further stores various programs and data required for the operation of the electronic device 500. The processing means 501, the ROM 502, and the RAM 503 are connected to one another through a bus 504. An input/output (I/O) interface 505 is also connected to the bus 504.

Typically, the following apparatuses may be connected to the I/O interface 505: an input means 506 including, for example, a touchscreen, a touchpad, a keyboard, a mouse, a camera, a microphone, an accelerometer, and a gyroscope; an output means 507 including, for example, a liquid crystal display (LCD), a speaker, and a vibrator; the storage means 508 including, for example, a magnetic tape and a hard drive; and a communication means 509. The communication means 509 may allow the electronic device 500 to be in wireless or wired communication with other devices for data exchange. Although FIG. 7 shows the electronic device 500 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, embodiments of the present disclosure include a computer program product, which includes a computer program carried on a non-transitory computer-readable medium, where the computer program includes program code for performing the method shown in the flowchart. In these embodiments, the computer program may be downloaded and installed from the network through the communication means 509, or installed from the storage means 508, or installed from the ROM 502. The computer program, when executed by the processing means 501, performs the above functions limited in the method in these embodiments of the present disclosure.

The names of messages or information exchanged between a plurality of apparatuses in the implementations of the present disclosure are used for illustrative purposes only, and are not used to limit the scope of these messages or information.

The electronic device according to these embodiments of the present disclosure and the co-streaming method according to the above embodiments belong to the same inventive concept. For the technical details not exhaustively described in these embodiments, reference may be made to the above embodiments, and these embodiments and the above embodiments have the same beneficial effects.

Embodiments of the present disclosure provide a computer storage medium, having a computer program stored therein. The program, when executed by a processor, implements the co-streaming method according to the above embodiment.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to:

The above computer-readable medium carries one or more programs. The above one or more programs, when executed by the electronic device, cause the electronic device to: display a virtual co-streaming interface based on a first co-streaming operation triggered by a target object in a live streaming room; generate a virtual co-streaming request based on a second co-streaming operation triggered by the target object for the virtual co-streaming interface; send the virtual co-streaming request to a live streaming server, to cause the live streaming server to create at least one virtual object; and receive information of at least one virtual object returned by the live streaming server, and display the information of the at least one virtual object in a corresponding microphone slot area.

Alternatively, the above computer-readable medium carries one or more programs, and the above one or more programs, when executed by the electronic device, cause the electronic device to: receive a virtual co-streaming request sent by a client through a live streaming room, and create a virtual object according to the virtual co-streaming request; send a co-streaming request to a co-streaming server based on the virtual object, to cause the co-streaming server to establish co-streaming between the virtual object and a target object according to the co-streaming request; and send, in a case of successful co-streaming, information of the virtual object to the client, to cause the client to display the information of the virtual object in a corresponding microphone slot area.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be completely executed on a target object computer, partially executed on the target object computer, executed as a stand-alone software package, partially executed on the target object computer and partially executed on a remote computer, or completely executed on the remote computer or a server. In the case of the remote computer, the remote computer may be connected to the target object computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit does not constitute a limitation on the unit itself in some cases. For example, a first acquiring unit may also be described as "a unit for acquiring at least two Internet protocol addresses".

Herein, the functions described above may be at least partially executed by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, a virtual co-streaming method is provided and performed by a client, including:
displaying a virtual co-streaming interface based on a first co-streaming operation triggered by a target object in a live streaming room;
generating a virtual co-streaming request based on a second co-streaming operation triggered by the target object for the virtual co-streaming interface;
sending the virtual co-streaming request to a live streaming server to cause the live streaming server to create at least one virtual object; and
receiving information of the at least one virtual object returned by the live streaming server, and displaying the information of the at least one virtual object in a corresponding microphone slot area.

Further, the displaying a virtual co-streaming interface based on a first virtual co-streaming operation triggered by a target object in a live streaming room includes:
determining the number of available microphone slots in the live streaming room in response to detecting that the target object triggers the first virtual co-streaming operation in the live streaming room; and
displaying the virtual co-streaming interface based on the first virtual co-streaming operation, and generating co-streaming controls for the number of the available microphone slots on the virtual co-streaming interface.

The generating a virtual co-streaming request based on a second co-streaming operation triggered by the target object for the virtual co-streaming interface includes:
generating the virtual co-streaming request based on the second co-streaming operation triggered by the target object for at least one co-streaming control.

Embodiments of the present disclosure further provide a co-streaming method. The method is performed by a live streaming server, including:
receiving a virtual co-streaming request sent by a client through a live streaming room, and creating a virtual object according to the virtual co-streaming request;
sending a co-streaming request to a co-streaming server based on the virtual object, to cause the co-streaming server to establish co-streaming between the virtual object and the target object according to the co-streaming request; and
sending, in response to successful co-streaming, information of the virtual object to the client, to cause the client to display the information of the virtual object in a corresponding microphone slot area.

Further, the creating a virtual object according to the virtual co-streaming request includes:
acquiring pre-stored information of virtual objects; and
generating structured data in a preset structure according to the information of the virtual object to obtain the virtual object.

Further, the sending a co-streaming request to a co-streaming server based on the virtual object includes:
running a co-streaming engine; and
sending the co-streaming request to the co-streaming server through the co-streaming engine, where the co-streaming request carries the information of the virtual object.

Further, the running a co-streaming engine includes:
starting a headless browser; and
running the co-streaming engine in the headless browser.

Further, the information of the virtual object at least includes: identification information of the virtual object, and audio and videos associated with the virtual object.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable sub combination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. A co-streaming method, the method being performed by a client, and the method comprising:
displaying a virtual co-streaming interface based on a first co-streaming operation triggered by a target object in a live streaming room;
generating a virtual co-streaming request based on a second co-streaming operation triggered by the target object for the virtual co-streaming interface;
sending the virtual co-streaming request to a live streaming server to cause the live streaming server to create at least one virtual object; and
receiving information of the at least one virtual object returned by the live streaming server, and displaying the information of the at least one virtual object in a corresponding microphone slot area.

2. The method according to claim 1, further comprising:
displaying the virtual co-streaming interface based on the first co-streaming operation triggered by the target object in the live streaming room, comprising: determining a number of available microphone slots in the live streaming room in response to detecting that the target object triggers the first virtual co-streaming operation in the live streaming room; and displaying the virtual co-streaming interface based on the first virtual co-streaming operation, and generating co-streaming controls for the number of the available microphone slots on the virtual co-streaming interface; and
generating the virtual co-streaming request based on the second co-streaming operation triggered by the target object for the virtual co-streaming interface comprising:
generating the virtual co-streaming request based on the second co-streaming operation triggered by the target object for at least one of the co-streaming controls.

3. A co-streaming method, the method being performed by a live streaming server, and the method comprising:
receiving a virtual co-streaming request sent by a client through a live streaming room, and creating a virtual object according to the virtual co-streaming request;
sending a co-streaming request to a co-streaming server based on the virtual object to cause the co-streaming server to establish co-streaming between the virtual object and a target object according to the co-streaming request; and
sending, in response to successful co-streaming, information of the virtual object to the client to cause the client to display the information of the virtual object in a corresponding microphone slot area.

4. The method according to claim 3, wherein creating the virtual object according to the virtual co-streaming request comprises:
acquiring pre-stored information of the virtual object; and
generating structured data in a preset structure according to the information of the virtual object to obtain the virtual object.

5. The method according to claim 3, wherein sending the co-streaming request to the co-streaming server based on the virtual object comprises:
running a co-streaming engine; and
sending the co-streaming request to the co-streaming server through the co-streaming engine, wherein the co-streaming request carries the information of the virtual object.

6. The method according to claim 5, wherein running the co-streaming engine comprises:
starting a headless browser; and
running the co-streaming engine in the headless browser.

7. The method according to claim 3, wherein the information of the virtual object at least comprises: identification information of the virtual object, and audio and videos associated with the virtual object.

8. A co-streaming apparatus, the apparatus being configured in a client, and the apparatus comprising:
a virtual co-streaming interface display module, configured to display a virtual co-streaming interface based on a first co-streaming operation triggered by a target object in a live streaming room;
a virtual co-streaming request generation module, configured to generate a virtual co-streaming request based on a second co-streaming operation triggered by the target object for the virtual co-streaming interface;
a virtual co-streaming request sending module, configured to send the virtual co-streaming request to a live streaming server to cause the live streaming server to create at least one virtual object; and
an information display module, configured to receive information of the at least one virtual object returned by the live streaming server, and display the information of the at least one virtual object in a corresponding microphone slot area.

9. A co-streaming apparatus, the apparatus being configured in a live streaming server, and the apparatus comprising:
a virtual co-streaming request receiving module, configured to receive a virtual co-streaming request sent by a client through a live streaming room, and create a virtual object according to the virtual co-streaming request;
a co-streaming request sending module, configured to send a co-streaming request to a co-streaming server based on the virtual object to cause the co-streaming server to establish co-streaming between the virtual object and a target object according to the co-streaming request; and
an information sending module, configured to receive successful co-streaming information returned by the co-streaming server, and send the information of the virtual object to the client according to the successful co-streaming information to cause the client to display the information of the virtual object in a corresponding microphone slot area.

10. An electronic device, comprising:
one or more processors; and
a storage, configured to store one or more programs,
the one or more programs, when executed by the one or more processors, causing the one or more processors to implement the co-streaming method according to any of claims 1 to 7.

11. A storage medium comprising computer-executable instructions, the computer-executable instructions, when executed by a computer processor, being configured to perform the co-streaming method according to any of claims 1 to 7.
